# EUROPEAN PATENT APPLICATION

(11) **EP 2 525 555 A1**
(43) Date of publication of application: **21.11.2012**
(21) Application number: 11785981.9
(22) Date of filing: 16.02.2011
(51) Int. Cl.: H04M 3/51, H04M 3/523

(54) **METHOD AND SYSTEM FOR REALIZING REAL-TIME FEEDBACK FUNCTION OF QUEUING IN NGCC**

(30) Priority: 24.05.2010 CN 201010182540
(71) Applicant: ZTE Corporation, Shenzhen, Guangdong 518057 (CN)
(72) Inventor: HUANG, Jun, Shenzhen Guangdong 518057 (CN)
(74) Representative: Pistolesi, Roberto
(86) International application number: PCT/CN2011/071014
(87) International publication number: WO 2011/147209

(57) **Abstract**

The present invention discloses a method for implementing a real-time feedback function of queuing in a New Generation Call Center (NGCC). The method includes the following steps: receiving a user's call information, and generating a queuing request according to the user's call information (101); detecting a current agent state according to the queuing request, and judging whether there is a spare target agent (102); if no spare target agent is detected currently, calculating current queuing data according to the current maintenance information in the NGCC and feeding back queuing information to the user (103). Correspondingly, the present invention further provides a system for implementing a real-time feedback function of queuing in a NGCC. In the present invention, by adding a real-time feedback mechanism, the user is enabled to obtain the current queuing information of system in real time during the waiting period, the user may decide to keep waiting or give it up based on the provided queuing information, thereby efficiently improving the accessing rate of turning to manual handling and the satisfaction degree of the user on the service system.

## Description

### Technical Field

The present invention relates to the field of communication technology, and in particular, to a method and system for implementing a real-time feedback function of queuing in a New Generation Call Center (NGCC).

### Background of the Related Art

NGCC is established based on the existing NGN (Next Generation Network) in the telecommunication, and its core conception is to separate the call bearer layer from the service layer using the switching and control technology of the NGN. The NGCC is also called as a customer service system, which is an information system used to provide various access means such as telephone, fax and E-maii for the users, and is manly used to process the requests, questioning, complaints, suggestions and consultation proposed by the users to the enterprises, for example, 1860 in the telecommunication industry and 95555 in the finance industry, and so on. The core function of the NGCC is to search for suitable operators (agents) for the users, manage the states of the agents and implement various call operations (for example, operations such as holding, consulting, conferring and one-step turn) so as to meet various requirements for smoothly completing the communication between the users and the agents.

In the NGCC, when a user selects to turn to an artificial service, if the agents having this serving skill are all busy, the user will enter a queuing state, at which moment the user will hear a queuing sound, and if a certain agent becomes spare during the waiting period, then the user queuing at the front of the line are accessed to the agent; if the agents are always busy during the waiting period, the user will time out in the queuing, at which moment the user will be prompted that the agents are busy, and whether to continue to wait or hang up.

In the related art, the application statistics data of the customer service system suggest that during the waiting period, the user tends to lose patience gradually after blindly waiting for a period of time since he does not know the queuing situation of the system and does not know how long to wait, and then hangs up, thus causing the accessing rate of turning to artificial handling and the users' satisfaction degree to decrease.

### Summary of the Invention

The main purpose of the present invention is to provide a method and system for implementing a real-time feedback function of queuing in a NGCC, so as to enable the user to obtain the current queuing information of system in real time during the waiting period, there by improving users' satisfaction degree for the customer service system.

The present invention proposes a method for implementing a real-time feedback function of queuing in a New Generation Call Center (NGCC), comprising the following steps of:
receiving call information of a user, and generating a queuing request according to the call information of the user;
detecting a current agent state according to the queuing request, and judging whether there is a spare target agent;
if detecting that there is no spare target agent currently, calculating current queuing data according to current maintenance information in the NGCC and feeding back queuing information to the user.

Preferably, the queuing request comprises: a skill number corresponding to a specific service type, a current dialogue number and a telephone number of the user;
the maintenance information comprises: an agent data queue, a user waiting queue, statistics data of queuing time lengths of all users during a current preset time period, agent login, logoff and state change information;
the queuing information comprises: the number of current NGCC target agents, a number of waiting users and a predicted waiting time length.

Preferably, the method further comprises: detecting the current agent state according to the queuing request, and when detecting that there are spare target agents currently, selecting a target agent for the user and locking the target agent.

Preferably, after the step of calculating current queuing data according to current maintenance information in the NGCC and feeding back queuing information to the user if detecting that there is no spare target agent currently, the method further comprises:
updating the maintenance information and queuing information periodically.

The present invention provides a system for implementing a real-time feedback function of queuing in a New Generation Call Center (NGCC), comprising: a call access module and a (Computer Telecommunication Integration) CTI module connected with the call access module, wherein,
the call access module comprises a turning-to-artificial service unit, which is used to receive call information of a user; generate a queuing request according to the call information of the user, and send the queuing request to the CTI module;
the CTI module is used to detect a current agent state according to the queuing request, and judge whether there is a spare target agent; when detecting that there is no spare target agent currently, calculate current queuing data according to current maintenance information in the NGCC and return queuing information to the user.

Preferably, the queuing request generated by the turning-to-artificial service unit comprises: a skill number corresponding to a specific service type, a current dialogue number and a telephone number of the user;
the CTI module calculating the current queuing data according to the current maintenance information in the NGCC is the CTI module calculating the current queuing data according to an agent data queue, a user waiting queue, statistics data of queuing time lengths of all users during a current preset time period, agent login, logoff and state change information;
the queuing information feedback to the user by the CTI module comprises: the number of current NGCC target agents, the number of waiting users and a predicted waiting time length.

The CTI module specifically comprises: a routing queuing sub-module, an agent state managing sub-module, and a real-time feeding back sub-module; wherein,
the routing queuing sub-module is used to detect the current agent state, and judge whether there are spare target agents, and when detecting that there are spare target agents currently, select a target agent for the user;
the agent state managing sub-module is used to lock the target agent selected by the routing queuing sub-module for the user;
the real-time feeding back sub-module comprises a calculating and feeding back unit, which is used to calculate current queuing data according to current maintenance information in the NGCC and feed back queuing information to the user when detecting that there is no spare target agent currently.

Preferably, the call access module further comprises:
a queuing information processing unit, which is used to output the queuing information to the user; and access the user to the target agent.

Preferably, the system further comprises:
an agent module, which is used to provide a call service for the user.

Preferably, the real-time feeding back sub-module further comprises:
a data maintaining unit, which is used to update the maintenance information and queuing information periodically.

In the present invention, by adding a real-time feedback mechanism, the user is enabled to obtain the current queuing information of system in real time during the waiting period, the user may decide to keep waiting or give it up based on the provided queuing information, thereby efficiently improving the accessing rate of turning to manual handling and the satisfaction degree of the user on the service system.

### Brief Description of Drawings

FIG. 1 illustrates the flow chart of an example of the method for implementing a real-time feedback function of queuing in a NGCC according to the present invention;
FIG. 2 illustrates the flow chart of another example of the method for implementing a real-time feedback function of queuing in a NGCC according to the present invention:
FIG. 3 illustrates the structure of an example of the system for implementing a real-time feedback function of queuing in a NGCC according to the present invention;
FIG. 4 illustrates the structure of another example of the system for implementing a real-time feedback function of queuing in a NGCC according to the present invention;
FIG. 5 illustrates the structure of the call accessing module in another example of the system for implementing a real-time feedback function of queuing in a NGCC according to the present invention;
FIG. 6 illustrates the structure of the real-time feeding back sub-moduie in another example of the system for implementing a real-time feedback function of queuing in a NGCC according to the present invention.

### Preferred Embodiments of the Present Invention

In order to make the technical solution of the present invention more clear and easy understood, further description will be made below with reference to the drawings:

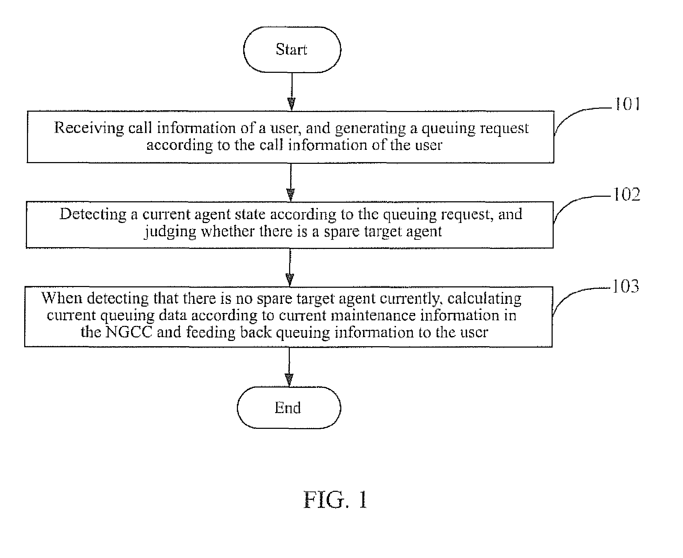

FIG. 1 illustrates the flow chart of an example of the method for implementing a real-time feedback function of queuing in a NGCC according to the present invention.

As shown in FIG. 1, the example provides a method for implementing a real-time feedback function of queuing in a NGCC, which comprises the following steps:
step 101, receiving call information of a user, and generating a queuing request according to the call information of the user;
step 102, detecting a current agent state according to the queuing request, and judging whether there is a spare target agent;
step 103, if detecting that there is no spare target agent currently, calculating current queuing data according to current maintenance information in the NGCC and feeding back queuing information to the user.

In the above steps, when the user enters the NGCC and selects the turning-to artificial service, the NGCC receives the call information of the user, and generates a queuing request according to the call information of the user. The queuing request comprises: a skill number corresponding to a specific service type, a current dialogue number and a telephone number of the user.

Thereafter, the NGCC outputs the queuing information to the user according to the queuing request and the current maintenance information in the NGCC. The specific process is as follows:

Firstly, the NGCC detects the current agent state according to the queuing request, i.e., detects whether there is a spare target agent currently, and when detecting that there are spare target agents currently, selects a target agent for the user and accesses the user to the target agent so as to provide call service for the user.

When detecting that there is no spare target agent, i.e., all skill agents having the capability of serving the user are busy, the NGCC calculates the number of the current target agents and the number of waiting users according to the current maintenance information, and estimates the waiting time length of the user according to the statistics data of queuing time lengths of all users during the current preset time period and outputs the queuing information to the user. At this moment, the user enters a queuing state, at which moment the user will hear a queuing sound, and if a certain agent becomes spare during the waiting period, then the user queuing at the front of the line is accessed to the agent; if the agents are always busy during the waiting period, the user will time out in the queuing, at which moment the user will be prompted that the agents are busy, and whether to continue to wait or hang up.

In this example, the maintenance information comprises: an agent data queue, a user waiting queue, statistics data of queuing time lengths of all users during a current preset time period, agent login, logoff and state change information.

The queuing information comprises: the number of current NGCC target agents (i.e., how many target agents there are), the number of waiting users (i.e., how many users are waiting) and a predicted waiting time length.

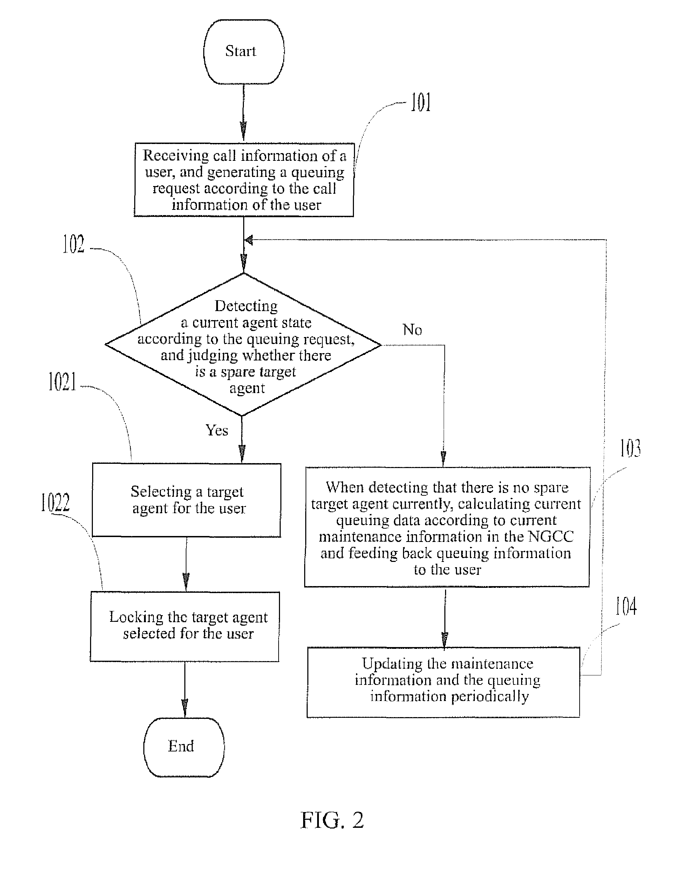

FIG. 2 illustrates the flow chart of another example of the method for implementing a real-time feedback function of queuing in a NGCC according to the present invention;

As shown in FIG. 2, this example provides a method for implementing a real-time feedback function of queuing in a NGCC, which comprises the following steps:
step 101, call information of a user is received, and a queuing request is generated according to the call information of the user;
step 102, the current agent state is detected according to the queuing request, and whether there is a spare target agent is judged;
   when spare target agents are detected currently, proceed to step 1021; otherwise, proceed to step 103;
in step 1021, a target agent is selected for the user;
in step 1022, the target agent selected for the user is locked;
in step 103, if no spare target agent is detected currently, the current queuing data are calculated according to current maintenance information in the NGCC, and queuing information is fed back to the user;
in this step, when no spare target agent is detected currently, the current number of the target agents and the number of waiting users are calculated according to the current maintenance information, and the waiting time length of the user is estimated according to the statistics data of queuing time lengths of all users during the current preset time period, and the queuing information is fed back to the user.
In step 104, the maintenance information and the queuing information are updated periodically.

In this example, after step 104 of updating the maintenance information and the queuing information periodically is executed, return to step 102.

In the above steps, when the user enters the NGCC and selects the turning-to-artificial service, the NGCC receives the call information of the user, and generates a queuing request according to the call information of the user. The queuing request, comprises: a skill number corresponding to a specific service type, a current dialogue number and a telephone number of the user.

Afterwards, the NGCC outputs the queuing information to the user according to the queuing request and the current maintenance information in the NGCC. The specific process is as follow:
firstly, the NGCC detects the current agent state according to the queuing request, i.e., detects whether there is a spare target agent currently, and when detecting that there are spare target agents currently, selects a target agent for the user and accesses the user to the target agent so as to provide call service for the user.

When detecting that there is no spare target agent, i.e., all skill agents having the capability of serving the user are busy, the NGCC calculates the number of the current target agents and the number of waiting users according to the current maintenance information, and estimates the waiting time length of the user according to the statistics data of queuing time lengths of all users during the current preset time period and outputs the queuing information to the user. In this example, the maintenance information comprises: an agent data queue, a user waiting queue, statistics data of queuing time lengths of all users during the current preset time period, agent login, logoff and state change information. The queuing information comprises: the number of current NGCC target agents (i.e., how many target agents there are), the number of waiting users (i.e., how many users are waiting) and a predicted waiting time length.

At this moment, the user enters a queuing state, at which moment the user will hear a queuing sound, and if a certain agent becomes spare during the waiting period, then the user queuing at the front of the line is accessed to the agent; meanwhile, the maintenance information and the queuing information are updated periodically, and the updated queuing information is output to the waiting users. If the agents are always busy during the waiting period, the user will time out in the queuing, at which moment the user will be prompted that the agents are busy, and whether to continue to wait or hang up.

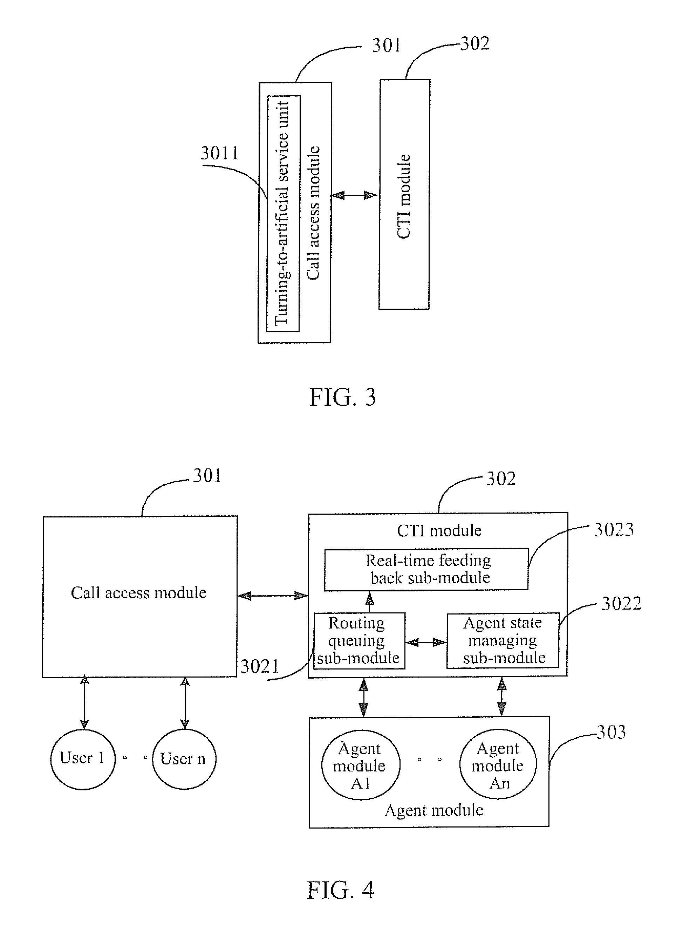

FIG. 3 illustrates the structure of an example of the system for implementing a real-time feedback function of queuing in a NGCC according to the present invention.

As shown in FIG. 3, this example provides a system for implementing a reall-time feedback function of queuing in a NGCC, comprising:
a call access module 301 and a CTI (Computer Telecommunication Integration) module 302 connected with the call access module 301, wherein, the call access module 301 comprises a turning-to-artificial service unit 3011, which is used to receive call information of a user; generate a queuing request according to the call information of the user, and send the queuing request to the CTI module 302;
the CTI module 302 is used to detect a current agent state according to the queuing request, when detecting that there is no spare target agent currently, calculate current queuing data according to current maintenance information in the NGCC and return queuing information to the user.

In this example, the queuing request comprises: a skill number corresponding to a specific service type, a current dialogue number and a telephone number of the user;
the maintenance information comprises: an agent data queue, a user waiting queue, statistics data of queuing time lengths of all users during the current preset time period, agent login, logoff and state change information;
the queuing information comprises: a number of current NGCC target agents, a number of waiting users and a predicted waiting time length.

FIG. 4 illustrates the structure of another example of the system for implementing a real-time feedback function of queuing in a NGCC according to the present invention.

As shown in FIG. 4, this example provides a system for implementing a real-time feedback function of queuing in a NGCC, comprising: a call access module 301 and a CTI module 302 connected with the call access module 301 as shown in the example of the above FIG. 3.

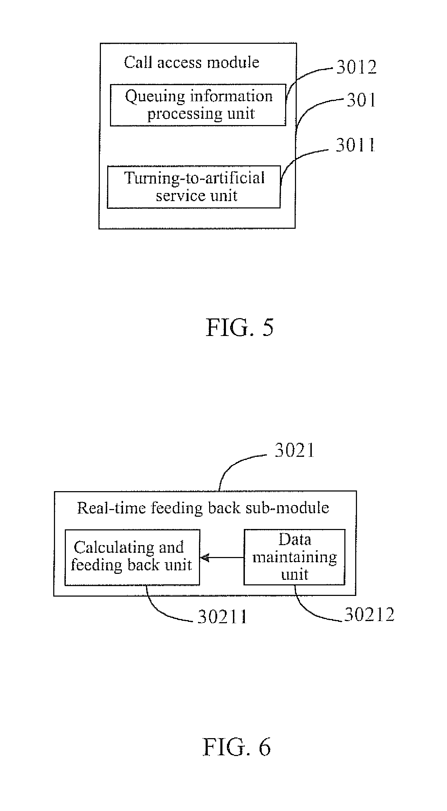

FIG. 5 illustrates the structure of the call accessing module in another example of the system for implementing a real-time feedback function of queuing in a NGCC according to the present invention. As shown in FIG. 5, in this example, the call access module 301 comprises a turning-to-artificial service unit 3011 and a queuing information processing unit 30.12; wherein:
the turning-to-artificial service unit 3011 is used to receive call information of a user; generate a queuing request according to the call information of the user, and send the queuing request to the CTI module 302;
the queuing information processing unit 3012 is used to output the queuing information to the user; and access the user to the target agent.

As shown in FIG. 4, in this example, the CTI module 302 specifically comprises: a routing queuing sub-module 3021, an agent state managing sub-module 3022, and a real-time feeding back sub-module 3023; wherein,
the routing queuing sub-module 3021 is used to detect the current agent state, and judge whether there are spare target agents, and when detecting that there are spare target agents currently, select a target agent for the user;
the agent state managing sub-module 3022 is used to lock the target agent selected by the routing queuing sub-module 3023 for the user;
the real-time feeding back sub-module 3023 is used to, when there is no spare target agent currently, calculate current queuing data according to current maintenance information and feed back the queuing information to the call access module 301.

In this example, this system further comprises:
an agent module 303, which is used to provide a call service for the user.

In this example, the real-time feeding back sub-module 3023 maintains the following data information of the system: an agent data queue, a user waiting queue, statistics data of queuing time lengths of all users during a current preset time period (for example preset to be five minutes); information of which the real-time feeding back sub-module 3023 is informed by the routing queuing sub-module 3023 when the agent login, logoff and state change; information abut user waiting of which the real-time feeding back sub-module 3023 is informed when the user is queuing; information abut user's queuing time length of which the real-time feeding back sub-module 3023 is informed when queuing of the user is over (including queuing succeeding, queuing being cancelled and queuing timing out). The real-time feeding back sub-module 3023 records the respective resource load information (the number of target agents and the number of previous waiting users) of each waiting user according to the data information

The call access module 301 generates a queuing request after the user selects the turning-to-artificial service, and sends the queuing request to the CIT module 302. The queuing request comprises: a skill number (corresponding to a specific service type), a current dialogue number DialogID and a telephone number of the user, etc.

The routing queuing sub-module 3023 of the CTI module 302 detects the agents that are currently spare and have the skills meeting the users' requirements, i.e., the target agents after receiving the queuing request, and if detecting that there is a spare target agent currently, it notifies the agent state managing sub-module 3022 to lock this agent, and accesses the user to this target agent through the call access module 301 so as to provide call service for the user. If no spare target agent is detected, the real-time feeding back sub-module 3023 is notified to feed back the queuing information of the user.

After receiving the queuing information of the user sent by the routing queuing, sub-module 3023, the real-time feeding back sub-module 3023 calculates the number of the current target agents with the skill and the number of waiting users according to the maintained agent queue and the user waiting queue, and meanwhile estimates the waiting time length of the user according to the maintained data about the queuing time length of the user (for example, the average queuing time length of all users is taken, and the default value of 30 seconds is taken if the average queuing time length is 0), and sends them to the call access module 301, the access module 301 outputs the queuing information to the user, i.e., prompting the user for: how many agents currently there are in the system, how many users are waiting, the predicted waiting time length, etc.

The real-time feeding back sub-module 3023 periodically (the time is configurable, for example 5 seconds) detects the resource load information of each waiting user (the number of agents having the skill and the number of previous users), and if the resource load information of the user changes, the resource load information, along with the calculated predicted queuing time length, is sent to the call access module 301. The call access module 301 feeds the above queuing information to the user so that the user can obtain the queuing information in real time.

FIG. 6 illustrates the structure of the real-time feeding back sub-module in another example of the system for implementing a real-time feedback function of queuing in a NGCC according to the present invention. As shown in FIG. 6, the real-time feeding back sub-module 3023 specifically comprises:
a calculating and feeding back unit 30211, which is used to calculate the current queuing data according to the current maintenance information and feed back the queuing information to the user when detecting that there is no spare target agent currently;
a data maintaining unit 30212, which is used to update the maintenance information and queuing information periodically.

In this example, when no spare target agent is detected currently, the calculating and feeding back unit 30211 calculates the number of the current target agents and the number of waiting users according to the current maintenance information, estimates the waiting time length of the user according to the statistics data of queuing time lengths of all users during the current preset time period, and feeds back the queuing information to the call access module 301, which then outputs the queuing information to the user.

When the current agent state changes, the data maintaining unit 30212 updates the maintenance information including an agent data queue, a user waiting queue, statistics data of queuing time lengths of all users at a current preset time, agent login, logoff and state change information, and updates the queuing information including the number of current NGCC target agents, i.e., how many target agents there are, the number of waiting users, i.e., how many waiting users, and a predicted waiting time length.

The working process of the system for implementing a real-time feedback function or queuing in a NGCC in this example will be introduced below in detail:
1. an agent A1 logs in and shows that it is busy, and it has the skill 1, the routing and queuing sub-module 3023 of the CTI module 302 informs the real-time feeding back sub-module 3023 of the agent information, and the data maintaining unit 30212 of the real-time feeding back sub-module 3023 updates the agent data queuing information;
2. a user U1 initiates a tuning-to-artificial service, the turning-to-artificial service unit 3011 of the call access module 301 initiates a queuing request, and the dialogue number DialogID is 100; the routing and queuing sub-module 3023 of the CTI module 302 cannot find any spare agent with the skill 1, and places the user U1 in a waiting queue, and informs the real-time feeding back sub-module 3023 of the user queuing information;
3. the calculating and feeding back unit 30211 of the real-time feeding back sub-module 3023 calculates and obtains the following data: the number of the current agent with the skill 1 is 1, the number of waiting users on the skill 1 is 0, and the predicted waiting time length is 30 seconds (the default value of 30 seconds is taken since the average waiting time length of queuing users during the previous five minutes is 0); and sends the result to the call access module 301;
4. the queuing information processing unit 3012 of the call access module 301 feeds back the information to the user U1, ad the user U1 hears the prompt tone "the system is busy, the number of agents is 1, 0 user is queuing, and the predicted waiting time length is 30 seconds", and it is assumed that the user selects to continue to wait;
5. the user U2 initiates a turning-to-artificial service 3 seconds later, and queues up to wait, and similarly the user U2 hears the prompt tone "the system is busy, the number of agents is 1. 1 user is queuing, and the predicted waiting time length is 30 seconds", and see the above flow;
6. the calculating and feeding back unit 30211 of the real-time feeding back sub-module 3023 periodically detects the current waiting users U1 and U2 five seconds later, and since the queuing information does not change, it does not repeatedly inform the users;
7. the agent A1 shows that it is spare eight seconds later, and the routing queuing sub-module 3023 of the CTI module 302 queues the user U1 for the agent, and informs the real-time feeding back sub-module 3023 of the user queuing ending information. The data maintaining unit 30212 of the real-time feeding back sub-module 3023 updates the user waiting queue and the queuing time length data;
8. the calculating and feeding back unit 30211 of the real-time feeding back sub-module 3023 periodically detects the user U2 ten seconds later, obtaining the following data: the current number of agents with the skill 1 is 1, the number of queuing users on the skill 1 is 0, and the predicted waiting time length is 8 seconds, and since the queuing information has changed, the current queuing information is sent to the queuing information processing unit 3012 in the call access module 301, and the queuing information processing unit 3012 feeds back the queuing information to the user U2. The user U2 hears the prompt tone again "the system is busy, the number of agents is 1, 0 user is queuing, and the predicted waiting time length is 8 seconds";
9. the calculating and feeding back unit 30211 of the real-time feeding back sub-module 3023 performs detection periodically (the detection may be performed every 5 seconds periodically);
10. the agent A1 finishes the dialogue with the user U1 and becomes spare 24 seconds later, and the routing and queuing sub-module 3021 of the CTI module 302 queues the user U2 for the agent A1, and informs the real-time feeding back sub-module 3023 of the user queuing ending information. The data maintaining unit 30212 of the real-time feeding back sub-module 3023 updates the user waiting queue and the queuing time length data. This flow circulates afterwards.

In the examples of the present invention, by the system and method with added queuing real-time feedback mechanism, the queuing users can be informed of the respective queuing information in real time so that the users are aware of the information such as their waiting positions, the system resources, and the predicted waiting time lengths, thereby making a decision on whether to continue to wait. This system can efficiently improve the accessing rate of turning to manual handling and the satisfaction degree of the user on the service system, and has significant economic benefits and social benefits.

The above examples are only preferred examples of the present invention, and are not intended to limit the patent scope of the present invention. Any equivalent structure or flow change made based on the description and drawings of the present invention, or direct or indirect application in other related technical fields, shall fall into the patent protection scope of the present invention.

## Claims

1. A method for implementing a real-time feedback function of queuing, in a New Generation Call Center (NGCC), comprising the following steps of:
receiving call information of a user, and generating a queuing request according to the call information of the user;
detecting a current agent state according to the queuing request, and judging whither there is a spare target agent;
if detecting that there is no spare target agent currently, calculating current queuing data according to current maintenance information in the NGCC and feeding back queuing information to the user.

2. The method for implementing a real-time feedback function of queuing in a New Generation Call Center (NGCC) according to claim 1, wherein,
the queuing request comprises: a skill number corresponding to a specific service type, a current dialogue number and a telephone number of the user;
the maintenance information comprises: an agent data queue, a user waiting queue, statistics data of queuing time lengths of all users during a current preset time period, agent login, logoff and state change information;
the queuing information comprises: the number of current NGCC target agents, a number of waiting users and a predicted waiting time length.

3. The method for implementing a real-time feedback function of queuing in a New Generation Call Center (NGCC) according to claim 1 or 2, further comprising: detecting the current agent state according to the queuing request, and when detecting that there are spare target agents currently, selecting a target agent for the user and locking the target agent.

4. The method for implementing a real-time feedback function of queuing in a New Generation Call Center (NGCC) according to claim 3, after the step of calculating current queuing data according to current maintenance information in the NGCC and feeding back queuing information to the user if detecting that there is no spare target agent currently, the method further comprising:
updating the maintenance information and queuing information periodically.

5. A system for implementing a real-time feedback function of queuing in a New Generation Call Center (NGCC), comprising: a call access module and a (Computer Telecommunication Integration) CTI module connected with the call access module, wherein,
the call access module comprises a turning-to-artificial service unit, which is used to receive call information of a user; generate a queuing request according to the call information of the user, and send the queuing request to the CTI module;
the CTI module is used to detect a current agent state according to the queuing request, and judge whether there is a spare target agent; when detecting that there is no spare target agent currently, calculate current queuing data according to current maintenance information in the NGCC and return queuing information to the user.

6. The system for implementing a real-time feedback function of queuing in a New Generation Call Center (NGCC) according to claim 5, wherein,
the queuing request generated by the turning-to-artificial service unit comprises: a skill number corresponding to a specific service type, a current dialogue number and a telephone number of the user;
the CTI module calculating the current queuing data according to the current maintenance information in the NGCC is the CTI module calculating the current queuing data according to an agent data queue, a user waiting queue, statistics data of queuing time lengths of all users during a current preset time period, agent login, logoff and state change information;
the queuing information feedback to the user by the CTI module comprises: the number of current NGCC target agents, the number of waiting users and a predicted waiting time length.

7. The system for implementing a real-time feedback function of queuing in a New Generation Call Center (NGCC) according to claim 5 or 6, wherein, the CTI module specifically comprises: a routing queuing sub-module, an agent state managing sub-module, and a real-time feeding back sub-module; wherein,
the routing queuing sub-module is used to detect the current agent stale, and judge whether there are spare target agents, and when detecting that there are spare target agents currently.
select a target agent for the user;
the agent state managing sub-module is used to lock the target agent selected by the routing queuing sub-module for the user;
the real-time feeding back sub-module comprises a calculating and feeding back unit, which is used to calculate current queuing data according to current maintenance information in the NGCC and feed back queuing information to the user when detecting that there is no spare target agent currently.

8. The system for implementing a real-time feedback function of queuing in a New Generation Call Center (NGCC) according to claim 7, wherein, the call access module further comprises: a queuing information processing unit, which is used to output the queuing information to the user; and access the user to the target agent.

9. The system for implementing a real-time feedback function of queuing in a New Generation Call Center (NGCC) according to claim 8, wherein, the system further comprises: an agent module, which is used to provide a call service for the user.

10. The system for implementing a real-time feedback function of queuing in a New Generation Call Center (NGCC) according to claim 8, wherein, the real-time feeding back sub-module further comprises: a data maintaining unit, which is used to update the maintenance information and queuing information periodically.
